# EUROPEAN PATENT SPECIFICATION

(11) **EP 2 857 462 B1**
(45) Date of publication and mention of the grant of the patent: **07.11.2018**
(21) Application number: 13797306.1
(22) Date of filing: 26.04.2013
(51) Int. Cl.: C09D 11/106, C09D 11/108, C09D 11/322, C09D 11/326

(54) **INK FOR AQUEOUS INK JET RECORDING AND PRODUCTION METHOD FOR LAMINATE**
WÄSSRIGE TINTE FÜR TINTENSTRAHLAUFZEICHNUNG UND HERSTELLUNGSVERFAHREN FÜR EIN LAMINAT
ENCRE POUR ENREGISTREMENT PAR JET D'ENCRE AQUEUSE ET PROCÉDÉ DE FABRICATION D'UN STRATIFIÉ

(30) Priority: 30.05.2012 JP 2012123063
(43) Date of publication of application: 08.04.2015
(73) Proprietor: DIC Corporation, Tokyo 174-8520 (JP)
(72) Inventor: KIMURA Toshihisa, Kitaadachi-gun Saitama 362-8577 (JP); KAWAHARADA Yukihiko, Kitaadachi-gun Saitama 362-8577 (JP); SATO Yoshihiro, Kitaadachi-gun Saitama 362-8577 (JP)
(74) Representative: TBK
(86) International application number: PCT/JP2013/062450
(87) International publication number: WO 2013/179839

(56) References cited:
- EP-A1- 1 158 031
- EP-A1- 1 460 112
- EP-A1- 2 368 948
- WO-A1-2011/093486
- WO-A1-2011/093486
- WO-A1-2013/008691
- JP-A- 2006 342 323
- JP-A- 2012 057 043
- JP-A- 2012 066 401

## Description

### Technical Field

The present invention relates to a water-based ink for ink-jet recording with which printing can be performed on a plastic film used as a food packaging material or the like and to a method for producing a laminated body using the water-based ink for ink-jet recording.

### Background Art

Printing using an ink-jet printer recording apparatus is a method in which ink is ejected from a nozzle and deposited onto a recording medium. Since this printing method does not require use of a plate in contrast to printing methods of the related art, there has been a growing demand for this printing method as an on-demand printing method compatible with low-volume, high-variety production that has been increasingly demanded recently.

An example application in which low-volume, high-variety production is in strong demand is the use of packaging materials for packaging foods, drinks, or the like. Generally, packaging materials include a plastic film that serves as a nonabsorbable base material. Examples of such packaging materials include the following: a packaging material including a plastic film on which printing is directly performed; and a laminated packaging material produced by performing printing on the rear surface of a plastic film that serves as an outer layer that has various functions including protection of an item, subsequently applying an adhesive to the resulting print layer, and laminating a heat-sealable sealant film on the plastic film. In the production of the former packaging material, printing is performed directly on a sealant film, which reduces the packaging cost. This packaging film is commonly used for packaging foods such as fruits and breads, which do not require high preservability of the contents at high temperatures and high humidities. On the other hand, the latter packaging material allows the scratch resistance of an ink to be suppressed while retaining the glossiness of a plastic film. Thus, the latter packaging material has a good appearance. In addition, using a plurality of films in combination imparts, for example, properties such as strength, cracking resistance, retort resistance, and heat resistance, which are required for protecting the contents during distribution, storage such as cold storage, treatment such as heat sterilization, or the like.

Among these, in surface printing, since printing is performed directly on the surface of a plastic film, the print layer may be brought into direct contact with a print layer of the adjoining packaging material, a box, or the like, and the print layer may be shaved due to the resulting friction. As a result, the printed contents may become blurred. Thus, primary importance is placed on adhesion to a plastic film for producing a surface-printed packaging material.

In backing printing, generally, lamination is performed by roll-to-roll processing, in which a printed film is temporarily wound after being dried and then unwound in an adhesive application step. At this time, a pressure is applied to the films while the printed surface of the film is in contact with the rear surface of the adjoining film, which may cause the printed surface to adhere to the rear surface, that is, a blocking phenomenon.

In a laminated packaging material, primary importance is placed particularly on suitability for lamination. An insufficient lamination strength may cause, after packaging of foods, peeling of the laminated layer from the package or rupture of the package originating from the heat-sealed portion.

Hitherto, gravure ink has been used as printing ink for producing food packaging materials. Known examples of gravure ink having high suitability for lamination include an ink produced by mixing an high-molecular-weight acrylic acid-maleic acid-graft-modified polypropylene resin, a styrene-acrylic resin-modified polyether urethane resin, and a small amount of ethylene-vinyl acetate copolymer resin together (e.g., see Patent Literature 1); and an ink produced by mixing an acrylic resin, a polyurethane resin, a chlorinated polyolefin, a ketone resin, etc. (e.g., see Patent Literature 2). Hitherto, chlorinated polyolefins have been commonly used since they have good adhesion to untreated olefin resins. However, as there has recently been growing concern over environmental issues, there has been a tendency to avoid using chlorine-containing compounds. That is, eliminating the use of halides is becoming assumed. In addition, printing with gravure ink requires use of a printing plate, which increases the production cost and time that are inadequate for the low-volume, high-variety production that has recently been demanded.

It has been considered that an adequate viscosity of ink-jet ink is 2 to 20 mPa·sec because ink-jet ink is used in a method in which the ink is ejected from a nozzle. However, the viscosities of the inks described in Patent Literatures 1 and 2 are several hundred mPa·sec, and it is difficult to use those inks in the ink-jet printing field because the viscosities of the inks are too high.

### Citation List

### Patent Literature

PTL 1: Japanese Unexamined Patent Application Publication No. 2005-255879
PTL 2: Japanese Unexamined Patent Application Publication No. 2006-299136

Further inks are disclosed in EP 2 368 948 A1, WO 2011/093486 A1 and EP 1 158 031 A1.

### Disclosure of Invention

### Technical Problem

An object of the present invention is to provide a water-based ink for ink-jet recording which realizes a good ejection property, which can be used as ink for food packaging material for forming an image, and which realizes sufficient adhesion of the resulting coating film to a plastic film that serves as a base material that does not absorb liquid, which reduces the risk of a blocking phenomenon that may occur in a coiling step. Solution to Problem

In order to address the above-described problems, the inventors of the present invention have conducted extensive studies and, as a result, found that a water-based ink for ink-jet recording which realizes a good ink-ejection property and which can be used as ink for food packaging material for forming a clear image may be produced using a specific olefin resin, a specific styrene-acrylic copolymer, a specific pigment, and water as essential components.

Specifically, the present invention provides a water-based ink for ink-jet recording, the water-based ink including a pigment, a pigment-dispersing agent, a binder, and water. The pigment-dispersing agent includes a styrene-acrylic copolymer. The binder includes an olefin resin. The polyolefin resin has a weight-average molecular weight of 10,000 or more and 1,000,000 or less and an acid value of 1 to 200 mgKOH/g.

The present invention also provides a method for producing a laminated body, the method including the steps of: forming a print layer on a nonabsorbable base material by an ink-jet recording method using the above-described water-based ink for ink-jet recording; forming an adhesive layer on the print layer; and laminating a sealant film layer on the adhesive layer.

### Advantageous Effects of Invention

According to the present invention, a water-based ink for ink-jet recording which realizes a good ejection property, which can be used as ink for food packaging material for forming an image may be produced. Description of Embodiments

### (Binder)

A polyolefin resin is used as the binder in the present invention. The polyolefin resin is not particularly limited, and an olefin resin that can exist in a homogeneous state as a mixture with a water-soluble solvent and/or water may be used. A resin that can exist in a homogeneous state as a mixture with a water-soluble solvent and/or water may be a resin scattered in a water-soluble solvent and/or water in the form of fine particles (including a state in which the size of dispersed particles is extremely small and the resin is scattered in the form of monomolecules), that is, a resin dispersible in a water-soluble solvent and/or water; or a water-soluble resin. Specifically, a polyolefin resin copolymer that is water-soluble or dispersible in water may be used.

The weight-average molecular weight Mw of the polyolefin resin used in the present invention is 10,000 or more and 1,000,000 or less as determined by GPC. It is considered that Mw exceeding 1,000,000 undesirably adversely affects ejection consistency. In the present invention, the weight-average molecular weight Mw is 1,000,000 or less, is preferably 500,000 or less, and further preferably 200,000 or less.

The weight-average molecular weight (Mw) herein refers to a weight-average molecular weight determined by GPC under the following conditions.

### [GPC Measurement Conditions]

Measurement apparatus: "HLC-8220 GPC" produced by Tosoh Corporation
Columns: Guard column "SuperHZ-L" (inside diameter: 4.6 mm × 2 cm) produced by Tosoh Corporation
+ "TSKgel SuperHZ4000" produced by Tosoh Corporation (inside diameter: 4.6 mm × 15 cm)
+ "TSKgel SuperHZ3000" produced by Tosoh Corporation (inside diameter: 4.6 mm × 15 cm)
+ "TSKgel SuperHZ2000" produced by Tosoh Corporation (inside diameter: 4.6 mm × 15 cm)
+ "TSKgel SuperHZ1000" produced by Tosoh Corporation (inside diameter: 4.6 mm × 15 cm)
Measurement conditions: Column temperature: 40°C
   Flow rate: 0.35 ml/min
Sample: prepared by drying and solidifying an aqueous resin solution and filtering a 0.5-mass% (resin solid basis) tetrahydrofuran (THF) solution through a microfilter (10 µl).
Calibration curve: a calibration curve was prepared using, as samples, monodisperse standard polystyrenes STK standard polystyrenes (produced by Tosoh Corporation) having molecular weights of 4000000 to 250.

The acid value of the polyolefin resin used in the present invention is 1 to 200 mgKOH/g. An acid value exceeding 200 mgKOH/g is considered to disadvantageously reduce adhesion to a base material. An acid value less than 1 mgKOH/g is considered to disadvantageously deteriorate dispersibility, which may results in degradation of ink-storage stability. The acid value of the polyolefin resin used in the present invention is 1 to 200 mgKOH/g, is preferably 5 to 100 mgKOH/g, and further preferably 5 to 50 mgKOH/g.

The polyolefin resin used in the present invention may be provided as a modified polyolefin by introducing polar groups such as amino groups, carboxyl groups, or hydroxyl groups or polymer chains to the hydrophobic polyolefin skeleton through covalent bonds depending on the desired physical properties without impairing the advantageous effects of the present invention.

Examples of a method for producing the modified polyolefin, that is, a method for introducing polar groups or polymer chains to the polyolefin skeleton through covalent bonds include a method in which monomers including polar groups are polymerized in the presence of the polyolefin and a method in which polymer chains are bonded to the polyolefin. The types and combination of the polyolefin, the monomers including polar groups, and the polymer chains may be selected appropriately depending on, for example, the desired characteristics of the resin emulsion. In other words, the type of the chemical structure of the modified polyolefin is not particularly limited and may be any of a random copolymer, a block copolymer, and a graft-modified product. The polyolefin may be any of a polyolefin that does not include reactive groups and a polyolefin that includes reactive groups.

Publicly known, various polyolefins and modified polyolefins may be used as the polyolefin that does not include reactive groups. Examples of such polyolefins include, but are not particularly limited to, a homopolymer of ethylene or propylene, a copolymer of ethylene and propylene, and a copolymer of ethylene or/and propylene and a comonomer. Examples of the comonomer include α-olefin comonomers having a carbon number of 2 or more, such as butene-1, pentene-1, hexene-1, heptene-1, octene-1, cyclopentene, cyclohexene, and norbornene. The α-olefin comonomer is preferably an α-olefin comonomer having a carbon number of 2 to 8, is more preferably an α-olefin comonomer having a carbon number of 2 to 6, and is further preferably an α-olefin comonomer having a carbon number of 2 to 4.

Alternatively, a copolymer of two or more of these α-olefin comonomers may also be used. A copolymer of the α-olefin monomer and a comonomer of vinyl acetate, an acrylic acid ester, a methacrylic acid ester, or the like may also be used. A hydrogenated copolymer of two or more monomers selected from aromatic vinyl monomers and conjugated diene monomers may also be used. The term "copolymer" used herein refers to both a random copolymer and a block copolymer. The polyolefin may be a straight-chain polyolefin or a branched-chain polyolefin.

Chlorinated polyolefins produced by chlorinating the above-described polyolefins may also be used. The degree of chlorination of the chlorinated polyolefin is normally 5% by weight or more and is preferably 10% by weight or more. Degree of chlorination is normally 50% by weight or less and is preferably 30% by weight or less. However, it is desirable that the polyolefin do not substantially contain chlorine in order to reduce the load on the environment. The expression "do not substantially contain chlorine" herein means that, for example, the proportion of a chlorinated polyolefin is less than 5% by weight.

Examples of the polyolefin that includes reactive groups include a copolymer produced by copolymerizing an unsaturated compound that does not include reactive groups and an unsaturated compound including reactive groups in the polymerization of the polyolefin; a polymer produced by graft-polymerizing a radical-polymerizable unsaturated compound including reactive groups to a polyolefin; and a polymer produced by converting a polyolefin including unsaturated terminal groups into Group-13 to Group-17 element groups or the like.

Examples of the reactive groups include a carboxylic acid group, a dicarboxylic anhydride group, a dicarboxylic anhydride monoester group, a hydroxyl group, an amino group, an epoxy group, and an isocyanate group. A carboxylic acid group, a dicarboxylic anhydride group, and a dicarboxylic anhydride monoester group are more preferable due to the following reasons. A carboxylic acid group, a dicarboxylic anhydride group, and a dicarboxylic anhydride monoester group have high reactivity and are therefore easily bonded to a hydrophilic polymer. In addition, since many unsaturated compounds include the above-described groups, copolymerization or a grafting reaction of the unsaturated compound to a polyolefin may be readily performed. Thus, polyolefins including the above-described groups, that is, acid-modified polyolefin resins, have high dispersibility in water.

The copolymer produced by copolymerizing an unsaturated compound that does not include reactive groups and an unsaturated compound including reactive groups in the polymerization of the polyolefin is a copolymer including the unsaturated compound including reactive groups inserted in the main chain thereof. Such a copolymer may be produced by copolymerizing, for example, an α-olefin such as ethylene, propylene, or butene with an α,β-unsaturated carboxylic acid, an ester of an α,β-unsaturated carboxylic acid, or an anhydride of the α,β-unsaturated carboxylic acid, such as (meth)acrylic acid, 2-hydroxyethyl (meth)acrylate, glycidyl (meth)acrylate, (meth)acrylamide, (dimethylamino)ethyl (meth)acrylate, (2-isocyanato)ethyl (meth)acrylate, or maleic anhydride (note that, the term "(meth)acrylic" and "(meth)acrylate" used herein refer to "acrylic or methacrylic" and "acrylate or methacrylate", respectively).

A specific example of such a copolymer is a propylene-butene-maleic anhydride copolymer. The above-described copolymers may be used alone or in combination of two or more. Needless to say, commercially available products may also be used.

The polymer produced by graft-polymerizing a radical-polymerizable unsaturated compound including reactive groups to a polyolefin may be produced by graft-polymerizing a radical-polymerizable unsaturated compound including reactive groups to a polyolefin prepared by polymerization. The unsaturated compound including reactive groups is grafted to the main chain of the polyolefin. Such a polymer may be produced by grafting, for example, (meth)acrylic acid, fumaric acid, maleic acid or an anhydride thereof, itaconic acid or an anhydride thereof, crotonic acid, 2-hydroxyethyl (meth)acrylate, 2-hydroxypropyl (meth)acrylate, (meth)acrylamide, (dimethylamino)ethyl (meth)acrylate, glycidyl (meth)acrylate, or (2-isocyanato)ethyl (meth)acrylate to a polyolefin such as polyethylene or polypropylene. These polymers may be used alone or in combination of two or more. The above-described polyolefins that do not include reactive groups may be used as the polyolefin in this reaction.

Specific examples of the polymer produced by graft-polymerizing a radical-polymerizable unsaturated compound including reactive groups to a polyolefin include maleic anhydride-modified polypropylene and its chlorinated derivative, a maleic anhydride-modified propylene-ethylene copolymer and its chlorinated derivative, a maleic anhydride-modified propylene-butene copolymer and its chlorinated derivative, an acrylic acid-modified polypropylene and its chlorinated derivative, an acrylic acid-modified propylene-ethylene copolymer and its chlorinated derivative, and an acrylic acid-modified propylene-butene copolymer and its chlorinated derivative. These polymers may be used alone or in combination of two or more.

A radical-polymerization initiator selected from common radical initiators appropriately may be used in graft polymerization. Examples of the radical-polymerization initiator include organic peroxides such as benzoyl peroxide and t-butylperoxy isopropyl monocarbonate and azo nitrile. These radical-polymerization initiators may be used alone or in combination of two or more.

A method for producing the polymer produced by graft-polymerizing a radical-polymerizable unsaturated compound including reactive groups to a polyolefin is not particularly limited, and any production method may be employed. Examples of the production method include a solution modification method (method in which a reaction is conducted under heating and stirring in a solution) and a melt-modification method (method in which a reaction is conducted under heating and stirring without using a solvent, or method in which a reaction is conducted by kneading using an extruder under heating).

The following polyolefins may be used as the polymer produced by converting a polyolefin including unsaturated terminal groups into Group-13 to Group-17 element groups or the like: a polyolefin produced by converting the double-bond portions of a polyolefin including terminal double bonds into Group-13 element groups such as boron groups or aluminum groups, which is described in Japanese Unexamined Patent Application Publication No. 2001-288372; a polyolefin produced by converting the double-bond portions of a polyolefin including terminal double bonds into halogen elements, which is described in Japanese Unexamined Patent Application Publication No. 2005-48172; and a polyolefin produced by converting the double-bond portions of a propylene-based polymer including terminal double bonds into mercapto groups, which is described in Japanese Unexamined Patent Application Publication No. 2001-98140. Generally, a block copolymer is produced.

The polymer chains introduced to the hydrophobic polyolefin skeleton through covalent bonds are selected depending on the desired physical properties and not particularly limited as long as the advantageous effects of the present invention are not impaired. The polymer chains may be any of straight chains and branched chains. Examples of the polymer chains that can be used include synthetic polymers such as a poly(meth)acrylic resin, a polyester resin, a polyether resin, a polyvinyl alcohol resin, and a polyvinylpyrrolidone resin; semi-synthetic polymers such as cationic starch, dextrin, and hydroxyethyl cellulose; and naturally occurring polymers such as agar, gum arabic, and gelatin. These polymer chains may include reactive groups.

The polymer chains are preferably synthetic polymers because, in such a case, stable physical properties are likely to be achieved. In particular, it is more preferable to use a poly(meth)acrylic resin, a polyester resin, a polyether resin, a polyvinyl alcohol resin, or a polyvinylpyrrolidone resin, and it is further preferable to use an amphiphilic polyether resin. These synthetic polymers may be used alone or in combination of two or more.

The poly(meth)acrylic resin that can be used for the polymer chains may be produced by radical polymerization, anionic polymerization, or cationic polymerization of an unsaturated carboxylic acid, an ester of an unsaturated carboxylic acid, or an anhydride of an unsaturated carboxylic acid. Examples of an unsaturated carboxylic acid, an ester of an unsaturated carboxylic acid, or an anhydride of an unsaturated carboxylic acid include (meth)acrylic acid, 2-hydroxyethyl (meth)acrylate, glycidyl (meth)acrylate, (meth)acrylamide, (dimethylamino)ethyl (meth)acrylate, (2-isocyanato)ethyl (meth)acrylate, and maleic anhydride. In order to achieve good adhesion to various film base materials composed of a thermoplastic resin, copolymerization with a hydrophobic radical-polymerizable compound (hydrophobic monomer) may be performed depending on the desired physical properties without impairing the advantageous effects of the present invention. Examples of the hydrophobic monomer that can be used for copolymerization include a (meth)acrylic acid ester-based monomer including an alkyl group having 1 to 12 carbon atoms, an aryl group having 1 to 12 carbon atoms, or an arylalkyl group having 1 to 12 carbon atoms; and a polymerizable vinyl monomer including a hydrocarbon group having 1 to 12 carbon atoms.

The polyvinyl alcohol resin that can be used for the polymer chains is generally produced by polymerizing vinyl acetate to prepare polyvinyl acetate and then by performing saponification. The degree of saponification may be complete saponification or partial saponification. The polyvinylpyrrolidone resin that can be used for the polymer chains may be produced by polymerizing vinyl pyrrolidone. Needless to say, commercially available products may also be used instead.

Examples of a method for introducing the polymer chains to a polyolefin include, but are not particularly limited to, the following: a method in which radical polymerization is performed in the presence of a polyolefin; and a method in which an acrylic resin including reactive groups such as hydroxyl groups, amino groups, glycidyl groups, or carboxylic acid groups (or carboxylic anhydride groups) is reacted with a polyolefin including reactive groups.

The amphiphilic polyether resin that can be used for the polymer chains introduced to a hydrophobic polyolefin skeleton through covalent bonds may be produced by ring-opening polymerization of a cyclic alkylene oxide or a cyclic alkyleneimine. Examples of a method for bonding the polymer chains to the polyolefin include, but are not particularly limited to, the following: a method in which ring-opening polymerization of a cyclic alkylene oxide is performed in a polyolefin including reactive groups; and a method in which a polyether resin including reactive groups produced by ring-opening polymerization or the like, such as a polyether polyol or a polyetheramine, is reacted with a polyolefin including reactive groups.

The polyetheramine is a compound including a primary amino group that serves as a reactive group located on one or both terminal groups of the resin having a polyether skeleton. As the polyetheramine, JEFFAMINE M series, D series, and ED series produced by Huntsman Corporation, USA, may be used.

The polyether polyol is a compound including hydroxyl groups that serve as reactive groups located on both terminal groups of the resin having a polyether skeleton. Preferred examples of a hydrophilic polyalkylene oxide and a hydrophilic polyalkylene imine include polyethylene oxide, polypropylene oxide, and polyethylene imine.

The number of the reactive groups may be 1 or more, but is more preferably only 1. If the number of the reactive groups is 2 or more, a three-dimensional network structure may be formed when the polymer chains are bonded to the polyolefin, which may disadvantageously cause gelation. However, even if polymer chains have a plurality of reactive groups, the gelation may be avoided when the polymer chains have only one reactive group that has higher reactivity than any other reactive group. A preferred example of such polymer chains is a hydrophilic polymer including a plurality of hydroxyl groups and one amino group having higher reactivity than the hydroxyl groups. The term "reactivity" used herein refers to reactivity with the reaction groups of the polyolefin.

Olefin resins that are commercially available in the form of an aqueous dispersion are preferably used as the polyolefin resin used in the present invention. Examples of such an olefin resin include HARDLEN series produced by TOYOBO CO., LTD., APTOLOK series produced by Mitsubishi Chemical Corporation, and ARROWBASE series produced by UNITIKA LTD.

The glass transition temperature (hereinafter, referred to as Tg) of the above-described olefin resin is preferably set appropriately depending on the desired application. For example, in order to perform printing on a flexible plastic film used as a food packaging material or the like, flexibility is desired. Thus, it is preferable that Tg is not too high. In order to achieve both adequate adhesion to films and adequate flexibility, Tg of the olefin resin is preferably -80°C to 80°C and is particularly preferably -80°C to 30°C. From a similar viewpoint, it is preferable to use an olefin resin having a low degree of crystallinity.

In the case where the above-described olefin resin is provided in the form of an aqueous dispersion, the diameter of particles of the olefin resin is preferably 5 to 1000 nm and is more preferably 10 to 400 nm from the viewpoint of the ejection property of the ink for ink-jet printing.

Generally, the amount of the above-described olefin resin used is 0.5% by mass to 30% by mass of the amount of ink. In particular, the amount of the olefin resin used is preferably 1% by mass to 10% by mass of the amount of ink.

### (Styrene-Acrylic Copolymer)

The styrene-acrylic copolymer used in the present invention may be produced by copolymerizing any styrene monomer with any (meth)acrylic monomer and is not particularly limited. The styrene-acrylic copolymer preferably include acidic groups in order to maintain ink-storage stability.

Examples of the styrene monomer used in the present invention include styrene and α-methylstyrene. Examples of the (meth)acrylic monomer include (meth)acrylic acid and esters thereof. Specific examples thereof include (meth)acrylic acid; (meth)acrylates such as methyl (meth)acrylate, ethyl (meth)acrylate, propyl (meth)acrylate, butyl (meth)acrylate, amyl (meth)acrylate, 2-ethylhexyl (meth)acrylate, octyl (meth)acrylate, nonyl (meth)acrylate, dodecyl (meth)acrylate, hexadecyl (meth)acrylate, octadecyl (meth)acrylate, cyclohexyl (meth)acrylate, benzyl (meth)acrylate, methoxyethyl (meth)acrylate, butoxyethyl (meth)acrylate, phenoxyethyl (meth)acrylate, nonylphenoxyethyl (meth)acrylate, glycidyl (meth)acrylate, dimethylaminoethyl (meth)acrylate, diethylaminoethyl (meth)acrylate, isobornyl (meth)acrylate, dicyclopentanyl (meth)acrylate, dicyclopentenyl (meth)acrylate, and dicyclopentenyloxyethyl (meth)acrylate; and mono(meth)acrylates including a (poly)alkylene glycol group such as (poly)ethylene glycol, (poly)propylene glycol, or (poly)butylene glycol.

A polymerization method for producing the above-described styrene-acrylic copolymer is generally, but not limited to, radical polymerization in which an azo compound or an organic peroxide is used. Regarding a production process, known production methods such as a bulk polymerization method, a solution polymerization method, and a solution-bulk polymerization method may be employed. The organic peroxide added for polymerization may be a publicly known organic peroxide such as t-butyl peroxybenzoate, t-butyl peroxy-2-ethylhexanoate, 1,1-bis(t-butylperoxy)-3,3,5-trimethylcyclohexane, 1,1-bis(t-butylperoxy)-cyclohexane, 2,2-bis(4,4-di-butylperoxycyclohexyl)propane, t-butylperoxyisopropyl monocarbonate, di-t-butyl peroxide, dicumyl peroxide, or ethyl-3,3-di-(t-butylperoxy)butyrate. The amount of organic peroxide added is preferably 0.001 to 5 parts by mass relative to 100 parts by mass of the total amount of monomers.

Examples of a solvent that can be used include a solvent composed of an aliphatic hydrocarbon such as butane, pentane, hexane, isopentane, heptane, octane, or isooctane; a solvent composed of an alicyclic hydrocarbon such as cyclopentane, methylcyclopentane, cyclohexane, methylcyclohexane, or ethylcyclohexane; and a solvent composed of an aromatic hydrocarbon such as benzene, toluene, ethylbenzene, or xylene. The amount of solvent added is preferably 5 to 20 parts by mass relative to 100 parts by mass of the total amount of monomers. Optionally, a molecular-weight modifier and the like may be used as needed.

The above-described styrene-acrylic copolymer may be a styrene-acrylic copolymer that is produced through radical copolymerization by the above-described method. Alternatively, commercially available styrene-acrylic copolymers may also be used.

The mass ratio among the monomer components of the above-described styrene-acrylic copolymer may be set appropriately so as to allow a copolymer to be formed. The amount of styrene monomer used is preferably 10% by mass or more from the viewpoint of the print quality of the output of ink-jet printing. As a component other than the styrene monomer, a monomer component including acidic groups such as acrylic acid groups or methacrylic acid groups is preferably used in a content of 10% or more by mass from the viewpoint of dispersion stability.

The acidic group content in a resin produced by polymerizing the monomer component including acidic groups can be determined on the basis of the acid value of the resin. The acid value of the styrene-acrylic copolymer is preferably 30 mgKOH/g or more and 200 mgKOH/g or less and is more preferably 30 mgKOH/g or more and 120 mgKOH/g or less from the viewpoint of ink stability. The acid value is the number of milligrams (mg) of potassium hydroxide (KOH) required to neutralize 1 g of the resin and is expressed in mgKOH/g. If the acid value is smaller than 30, an affinity for water or a water-soluble solvent may be reduced, which deteriorates the dispersion stability of a pigment contained in ink which serves as a coloring material. On the other hand, if the acid value is larger than 200, aggregation of the pigment is likely to occur in the steps for preparing an ink composition, such as the step of adding a water-soluble organic solvent. This may deteriorate ink-storage stability. Furthermore, the water resistance of the printed output may be degraded.

The weight-average molecular weight of the above-described styrene-acrylic copolymer is preferably, but not particularly limited to, 5,000 to 50,000 from the viewpoints of the storage stability, viscosity, and the like of the ink to be produced.

The term "weight-average molecular weight (GPC-Mw)" used herein refers to a weight-average molecular weight determined by GPC based on the above-described method.

### (Pigment)

The pigment used in the present invention is not particularly limited, and pigments that are commonly used for producing a water-based ink for ink-jet recording may be used as coloring materials. Specifically, publicly known inorganic pigments and organic pigments that can be dispersed in water or a water-soluble organic solvent may be used. Examples of the inorganic pigments include titanium oxide, iron oxide, and carbon black that is produced by a publicly known method such as a contact method, a furnace method, or a thermal method. Examples of the organic pigments include azo pigments (including, e.g., azo lake, an insoluble azo pigment, a condensed azo pigment, and a chelate azo pigment), polycyclic pigments (e.g., a phthalocyanine pigment, a perylene pigment, a perinone pigment, an anthraquinone pigment, a quinacridone pigment, a dioxazine pigment, a thioindigo pigment, an isoindolinone pigment, and a quinophthalone pigment), dye chelates (e.g., a basic dye-type chelate and an acidic dye-type chelate), a nitro pigment, a nitroso pigment, and aniline black.

Specific examples of the pigment include, as carbon black, No. 2300, No. 2200B, No. 900, No. 980, No. 33, No. 40, No, 45, No. 45L, No. 52, HCF88, MA7, MA8, and MA100 produced by Mitsubishi Chemical Corporation; Raven5750, Raven5250, Raven5000, Raven3500, Raven1255, and Raven700 produced by Columbia; Regal 400R, Regal 330R, Regal 660R, Mogul L, Mogul 700, Monarch800, Monarch880, Monarch900, Monarch1000, Monarch1100, Monarch1300, and Monarch1400 produced by Cabot Corporation; and Color Black FW1, Color Black FW2, Color Black FW2V, Color Black FW18, Color Black FW200, Color Black S150, Color Black S160, Color Black S170, Printex 35, Printex U, Printex V, Printex 1400U, Special Black 6, Special Black 5, Special Black 4, Special Black 4A, NIPEX150, NIPEX160, NIPEX170, and NIPEX180 produced by Degussa.

Specific examples of a pigment used as yellow ink include C.I. Pigment Yellow 1, 2, 12, 13, 14, 16, 17, 73, 74, 75, 83, 93, 95, 97, 98, 109, 110, 114, 120, 128, 129, 138, 150, 151, 154, 155, 174, 180, and 185.

Specific examples of a pigment used as magenta ink include C.I. Pigment Red 5, 7, 12, 48(Ca), 48(Mn), 57(Ca), 57:1, 112, 122, 123, 146, 168, 176, 184, 185, 202, and 209.

Specific examples of a pigment used as cyan ink include C.I. Pigment Blue 1, 2, 3, 15, 15:3, 15:4, 16, 22, 60, 63, and 66.

The following pigments may be used in the present invention: a "self-dispersing-type" pigment (surface-treated pigment), which is a pigment that includes dispersibility-in-water-imparting groups attached to the surfaces of the particles of the pigment so that the dispersion state can be consistently maintained without using a dispersing agent; an "encapsulated" pigment (pigment containing a polymer dispersible in water), which is a pigment in which the entire surfaces of the pigment particles are covered with a polymer so that the dispersion state can be consistently maintained without using a dispersing agent; and a pigment dispersed using a dispersing agent.

A method for dispersing the pigment is not particularly limited, but it is preferable to employ a publicly known dispersion method using the above-described styrene-acrylic copolymer. Examples of the dispersion method include the following (1) to (5):
(1) A method in which a pigment is added to an aqueous medium including the above-described styrene-acrylic copolymer and water and subsequently the pigment is dispersed in the aqueous medium using a stirring/dispersing apparatus to prepare an aqueous pigment dispersion;
(2) A method in which a pigment and the above-described styrene-acrylic copolymer are kneaded using a kneader, the kneaded mixture is added to an aqueous medium including water, and the resulting liquid mixture is processed using a stirring/dispersing apparatus to prepare an aqueous pigment dispersion;
(3) A method in which a pigment is added to a solution prepared by dissolving the above-described styrene-acrylic copolymer in an organic solvent having compatibility to water, such as methyl ethyl ketone or tetrahydrofuran, subsequently the pigment is dispersed in the organic solution using a stirring/dispersing apparatus, then emulsion inversion is performed using an aqueous medium, and the organic solvent is distilled away to prepare an aqueous pigment dispersion;
(4) A method in which a pigment is added to a solution prepared by dissolving the above-described styrene-acrylic copolymer in an organic solvent having compatibility to water, such as methyl ethyl ketone or tetrahydrofuran, subsequently the pigment is dispersed in the organic solution using a stirring/dispersing apparatus, then neutralization is performed using a basic compound to impart hydrophilicity to the resulting pigment dispersion, and thereby the pigment dispersion is dispersed in water to prepare an aqueous pigment dispersion; and
(5) A method in which a pigment is added to a solution prepared by dissolving the above-described styrene-acrylic copolymer in an organic solvent having compatibility to water, such as methyl ethyl ketone or tetrahydrofuran, subsequently the pigment is dispersed in the organic solution using a stirring/dispersing apparatus, then neutralization is performed using a basic compound to impart hydrophilicity to the resulting pigment dispersion, an acidic compound is further added to the dispersion to impart hydrophobicity to the styrene-acrylic copolymer, and thereby the styrene-acrylic copolymer is fixed to the pigment particles to prepare an aqueous pigment dispersion, that is, an acid deposition method.

Examples of the stirring/dispersing apparatus include an ultrasonic homogenizer, a high-pressure homogenizer, a paint shaker, a ball mill, a roll mill, a sand mill, a sand grinder, DINOMILL, DISPERMAT, SC-MILL, and NANOMIZER. These stirring/dispersing apparatuses may be used alone or in combination of two or more.

Examples of the kneader include a two-roll kneader, a Henschel mixer, a pressure kneader, a Banbury mixer, and a planetary mixer. These kneaders may be used alone or in combination of two or more.

The amount of the above-described styrene-acrylic copolymer used is generally 10% by mass to 100% by mass of the amount of pigment. In particular, the amount of the styrene-acrylic copolymer used is preferably 15% by mass to 80% by mass and is particularly preferably 20% by mass to 70% by mass of the amount of pigment.

### (Ink Preparation Method)

A method for preparing the above-described ink is not particularly limited, and methods that are commonly used in the related art may be employed. For example, the following methods may be employed: the above-described pigment dispersion prepared by dispersing a pigment using a pigment-dispersing agent, the above-described olefin resin, an aqueous solvent such as water or a water-soluble organic solvent, and as needed, a surfactant, a pigment-dispersing agent, a viscosity modifier, an antifoaming agent, a preservative, and the like are mixed together, and dispersion is performed using a disperser or a stirrer, such as a bead mill, a ball mill, a sand mill, Attritor, a roll mill, an agitator, a Henschel mixer, a colloid mill, an ultrasonic homogenizer, an ultra-high-pressure homogenizer, or a pearl mill. Optionally, various types of additives may be further added to the dispersion as needed.

The water-soluble organic solvent used in the present invention is preferably, but not particularly limited to, an organic solvent having compatibility with water so that clogging at an ink-jet printing head can be suppressed. Examples of such a water-soluble organic solvent include organic solvents that include glycerin, ethylene glycol, diethylene glycol, triethylene glycol, polyethylene glycol having a molecular weight of 2000 or less, propylene glycol, dipropylene glycol, tripropylene glycol, 1,3-propylene glycol, isopropylene glycol, isobutylene glycol, 1,4-butanediol, 1,3-butanediol, 1,5-pentanediol, 1,6-hexanediol, meso-erythritol, or pentaerythritol. In particular, organic solvents that include propylene glycol or 1,3-butyl glycol are safe and have a good ink-drying property and a good ink-ejection property.

Examples of the surfactant used in the present invention include acetylene-based surfactants. Examples thereof include 2,4,7,9-tetramethyl-5-decyn-4,7-diol, 3,6-dimethyl-4-octyn-3,6-diol, and 3,5-dimethyl-1-hexyn-3-ol. Examples of commercially available surfactants include Surfynol 104, 82, 440, 465, 485, and TG (the above-described products are available from Air Products and Chemicals, Inc.); and Olfine STG and Olfine E1010 (product name, the above-described products are produced by Nisshin Chemical Co., Ltd.).

### (Laminated Body)

The water-based ink for ink-jet recording according to the present invention, which is used for lamination, is used as printing ink for producing a laminated body such as a laminated film used as a food packaging material or the like.

The plastic film used in the present invention, which serves as a nonabsorbable base material, is not particularly limited, and publicly known plastic films used as food packaging materials may be used. Specific examples of such plastic films include a polyester film composed of polyethylene terephthalate, polyethylene naphthalate, or the like; a polyolefin film composed of polyethylene, polypropylene, or the like; a polyamide-based film composed of nylon or the like; a polystyrene film; a polyvinyl alcohol film; a polyvinyl chloride film; a polycarbonate film; a polyacrylonitrile film; and a biodegradable film such as a polylactic acid film. In particular, a polyester film, a polyolefin film, and a polyamide film are preferably used, and a polyethylene terephthalate film, a polypropylene film, and a nylon film are further preferably used. Optionally, the above-described films may be coated with polyvinylidene chloride or the like in order to impart a barrier property. As needed, a film on which a layer composed of a metal such as aluminum or a metal oxide such as silica or alumina is formed by vapor deposition may be used in combination.

The plastic film may be an unoriented film but is preferably a monoaxially or biaxially oriented film. The surface of the film may be untreated but is preferably treated by, for example, a corona discharge treatment, an ozone treatment, a low-temperature plasma treatment, a flame treatment, or a glow discharge treatment, in order to enhance adhesion.

The thickness of the plastic film may be changed appropriately depending on the application. For example, for a flexible-packaging application, the thickness of the plastic film is preferably 10 to 100 µm and is more preferably 10 to 30 µm in order to impart flexibility, durability, and resistance to curling.

A print layer is formed on the plastic film using the water-based ink for ink-jet recording according to the present invention, which is used for lamination.

Any ink-jet recording method that is publicly known in the related art may be employed. Examples of the ink-jet recording method include a method in which liquid droplets are ejected using vibration of a piezoelectric device (a recording method using an ink-jet head that forms ink droplets due to mechanical deformation of an electrostriction device) and a method in which heat energy is used.

Subsequently, an adhesive layer for lamination is formed on the print layer. An adhesive used for forming the adhesive layer is not particularly limited, and publicly known adhesives that are commonly used for lamination may be used. Specific examples of such adhesives include adhesives including an acrylic resin, a urethane resin, a urethane-modified polyester resin, a polyester resin, an epoxy resin, an ethylene-vinyl acetate copolymer resin (EVA), a vinyl chloride resin, a vinyl chloride-vinyl acetate copolymer resin, natural rubbers, or a synthetic rubber such as SBR, NBR, or silicone rubber. An adhesive for dry lamination is preferably a one-component or two-component curing polyether-polyurethane adhesive, polyester-polyurethane adhesive, or polyester adhesive. An adhesive for extrusion lamination is preferably an adhesive including polyethyleneimine, an alkyl titanate, a polyurethane resin, or urethane.

Then, a sealant film layer is formed by lamination. Publicly known lamination methods such as a dry lamination method, a non-solvent lamination method, and an extrusion lamination method may be employed.

The dry lamination method includes, specifically, applying the above-described adhesive to one surface of the base film by a gravure roll method, subsequently superimposing another base film on the surface of the base film, and bonding the base films to each other by dry lamination. The non-solvent lamination method includes applying the above-described adhesive, which is heated to a temperature between room temperature and about 120°C, to a base film using a roller such as a roll coater and then immediately bonding a new film material to the surface of the base film to form a laminated film.

In the extrusion lamination method, an organic solvent solution of the above-described adhesive, which serves as an adhesion aid (anchor coating agent), is applied to a base film by a roller such as a gravure roller, the solvent is dried at a temperature between room temperature to 140°C and a curing reaction is conducted, and subsequently a molten polymer material is laminated on the base film using an extruder to form a laminated film. The polymer material to be molten is preferably an olefin resin such as a low-density polyethylene resin, a linear low-density polyethylene resin, or an ethylene-vinyl acetate copolymer resin.

In order to use the above-described laminated body as a food packaging material, it is preferable to control the thicknesses of the plastic film, the ink layer, and the adhesive layer so that the thickness of the laminated body is 300 µm or less.

### EXAMPLES

The advantageous effects of the present invention are described specifically below with reference to examples and comparative examples. However, the present invention is not limited to these examples. Hereinafter, the "parts" and "%" are on a mass basis.

In the following synthesis examples, examples, and comparative examples, the "parts" and "%" are on a mass basis.

### [Synthesis Example 1]

Into a reaction container of an automatic polymerization reaction apparatus (polymerization tester Model: DSL-2AS, produced by TODOROKI SANGYO CO., LTD.) equipped with a stirrer, a dropper, a temperature sensor, and a refluxing apparatus including a nitrogen-introducing unit disposed on the upper portion of the refluxing apparatus, 1,100 parts of methyl ethyl ketone was charged. The inside of the reactor was purged with nitrogen under stirring. The temperature was increased to 80°C while the inside of the reactor was maintained in a nitrogen atmosphere. Subsequently, a liquid mixture of 160 parts of 2-hydroxyethyl methacrylate, 240 parts of butyl methacrylate, 230 parts of butyl acrylate, 170 parts of methacrylic acid, 200 parts of styrene, and 80 parts of "PERBUTYL (registered trademark) O" (active constituent: t-butyl peroxy-2-ethylhexanoate, produced by NOF CORPORATION) was added dropwise to the reactor over 4 hours using the dropper. After the addition was completed, the reaction was continued for further 15 hours at the same temperature. The temperature of the resulting reaction mixture was reduced to room temperature by radiational cooling. Subsequently, the reaction mixture was diluted with methyl ethyl ketone so that the nonvolatile content of the resulting solution was 50%. Thus, a solution of a styrene-acrylic copolymer (A-1) having an acid value of 110, a Tg of 30°C, and a weight-average molecular weight (GPC-Mw) of 15,000 was prepared.

### [Preparation Example 1] (Cyan Aqueous Pigment Dispersion (LC-a))

Into a mixing chamber equipped with a cooling jacket, the copolymer (A-1) prepared in Synthesis Example 1, a 20% aqueous sodium hydroxide solution, water, and a pigment that was 1000 parts of Fastogen (registered trademark) Blue TGR (C.I. Pigment Blue 15:3 produced by DIC Corporation), 300 parts of methyl ethyl ketone, and water were charged and mixed together under stirring. The amount of each component charged was determined in the following manner: the proportion of the amount of copolymer (A-1) to the amount of pigment was 40% in terms of nonvolatile content; the amount of the 20% aqueous sodium hydroxide solution was set so that 100% of the acid value of the copolymer (A-1) was neutralized; and the amount of water charged was set to the amount of water required to control the nonvolatile content of the resulting liquid mixture to 30%.

The resulting liquid mixture was passed through a dispersing apparatus (SC-MILL Model: SC100/32, produced by Mitsui Mining Co., Ltd.) filled with zirconia beads having a diameter of 0.3 mm, and dispersion was performed for 4 hours by a circulation method. The rotational speed of the dispersing apparatus was set to 2700 revolution/minute. Cold water was passed through the cooling jacket so that the temperature of the resulting liquid dispersion was kept at 40°C or less.

After dispersing was completed, the resulting undiluted liquid dispersion was removed from the mixing chamber. Subsequently, the mixing chamber and flow channels of the dispersing apparatus were washed with 10,000 parts of water, and the water used was mixed with the undiluted liquid dispersion to prepare a diluted liquid dispersion. The diluted liquid dispersion was charged into a distillation apparatus made of glass, and the whole amount of methyl ethyl ketone and part of water were removed by atmospheric distillation.

The liquid dispersion from which methyl ethyl ketone was removed was cooled. Subsequently, 10% hydrochloric acid was added dropwise to the liquid dispersion under stirring to adjust the pH of the liquid dispersion to 4.5. The liquid dispersion was filtered through a Nutsche filter to obtain the solid content in the liquid dispersion, and the solid content was washed with water. The resulting cake was charged in a container. A 20% aqueous potassium hydroxide solution and water were added to the container in such a manner that 85% of the acid value of the styrene-acrylic copolymer was neutralized. The resulting mixture was again dispersed using a dispersing/stirring apparatus (TK HOMODISPER Model: 20, produced by PRIMIX Corporation), and pure water was added to the resulting liquid dispersion to adjust the nonvolatile content of the liquid dispersion to 23%. The liquid dispersion was placed in a centrifuge (Model: 50A-IV, produced by Sakuma Seisakusho KK) at 6000 G for 30 minutes to remove coarse particles. Purified water was added to the liquid dispersion to adjust the nonvolatile content of the liquid dispersion. Thus, a cyan aqueous pigment dispersion (LC-a) having a pigment concentration of 15% was prepared.

### [Preparation Example 2] (Cyan Aqueous Pigment Dispersion (LC-b))

Into a mixing chamber equipped with a cooling jacket, 2250 parts of water, 500 parts of isopropyl alcohol, and 1250 parts of Disperbyk-190 (produced by BYK Japan KK, polyethylene glycol, polyoxypropylene glycol-modified styrene-maleic acid copolymer. nonvolatile content: 40%) were charged. Into the mixing chamber, 1000 parts of Fastogen (registered trademark) Blue TGR (C.I. Pigment Blue 15:3 produced by DIC Corporation) was charged and mixed under stirring.

The resulting liquid mixture was passed through a dispersing apparatus (SC-MILL Model: SC100/32, produced by Mitsui Mining Co., Ltd.) filled with zirconia beads having a diameter of 0.3 mm, and dispersion was performed for 4 hours by a circulation method. The rotational speed of the dispersing apparatus was set to 2700 revolution/minute. Cold water was passed through the cooling jacket so that the temperature of the liquid dispersion was kept at 40°C or less. Pure water was added to the liquid dispersion to adjust the nonvolatile content of the liquid dispersion to 30%.

The liquid dispersion was placed in a centrifuge (Model: 50A-IV, produced by Sakuma Seisakusho KK) at 6000 G for 30 minutes to remove coarse particles. Purified water was added to the liquid dispersion to adjust the nonvolatile content of the liquid dispersion. Thus, a cyan aqueous pigment dispersion (LC-b) having a pigment concentration of 15% was prepared.

### [Preparation Example 3] (Magenta Aqueous Pigment Dispersions (LM-a) and (LM-b))

A magenta aqueous pigment dispersion (LM-a) having a pigment concentration of 15% was prepared as in the preparation of the cyan aqueous pigment dispersion (LC-a) except that the pigment was changed to CROMOPHTAL JET MAGENTA DMQ (C.I. Pigment Red 122 produced by BASF SE).

A magenta aqueous pigment dispersion (LM-b) having a pigment concentration of 15% was prepared as in the preparation of the cyan aqueous pigment dispersion (LC-b) except that the pigment was changed to CROMOPHTAL JET MAGENTA DMQ (C.I. Pigment Red 122 produced by BASF SE).

### [Preparation Example 4] (Yellow Aqueous Pigment Dispersions (LY-a) and (LY-b))

A yellow aqueous pigment dispersion (LY-a) having a pigment concentration of 15% was prepared as in the preparation of the cyan aqueous pigment dispersion (LC-a) except that the pigment was changed to Fast Yellow 7427 (C.I. Pigment Yellow 74 produced by SANYO COLOR WORKS, Ltd.).

A yellow aqueous pigment dispersion (LY-b) having a pigment concentration of 15% was prepared as in the preparation of the cyan aqueous pigment dispersion (LC-b) except that the pigment was changed to Fast Yellow 7427 (C.I. Pigment Yellow 74 produced by SANYO COLOR WORKS, Ltd.).

### [Preparation Example 5] (Black Aqueous Pigment Dispersions (LK-a) and (LK-b))

A black aqueous pigment dispersion (LK-a) having a pigment concentration of 15% was prepared as in the preparation of the cyan aqueous pigment dispersion (LC-a) except that the pigment was changed to Carbon Black #960 (produced by Mitsubishi Chemical Corporation).

A black aqueous pigment dispersion (LK-b) having a pigment concentration of 15% was prepared as in the preparation of the cyan aqueous pigment dispersion (LC-b) except that the pigment was changed to Carbon Black #960 (produced by Mitsubishi Chemical Corporation).

### [Preparation Example 6] (Preparation of Inks)

Liquid mixtures prepared in accordance with the respective compositions shown in Tables 1 to 8 were each filtered through a 0.5-µm filter to prepare cyan inks, magenta inks, yellow inks, and black inks. Details of the substances and the like shown in Tables 1 to 8 are described below. The reagents were used directly unless otherwise noted.
APTOLOK BW-5550 (product name): olefin resin emulsion (acid-modified polyolefin resin having a polyether polymer chain, produced by Mitsubishi Chemical Corporation, pH: 8, acid value: 18 mgKOH/g, solid content: 30%)
HARDLEN NA-3002 (product name): olefin resin emulsion (acid-modified polyolefin resin, produced by TOYOBO CO., LTD., pH: 8, acid value: 33 mgKOH/g, solid content: 30%)
HYTEC P-5060P (product name): olefin resin emulsion (produced by TOHO Chemical Industry Co., Ltd., pH: 8, acid value: 55 mgKOH/g, solid content: 40%)
JONCRYL780 (product name): acrylic resin emulsion (acrylic resin, produced by BASF SE, pH: 8, acid value: 46 mgKOH/g, solid content: 48%)
Surfynol 440 (product name): acetylene surfactant produced by Air Products Japan, Inc.

**[Table 1]**

| Table 1 Cyan ink | Preparation example C-1 | Preparation example C-2 | Preparation example C-3 | Preparation example C-4 | Preparation example C-5 | Preparation example C-6 |
|---|---|---|---|---|---|---|
| Ink name | (C-1) | (C-2) | (C-3) | (C-4) | (C-5) | (C-6) |
| Binder (product name) | Olefin resin APTOLOK BW-5550 | Olefin resin APTOLOK BW-5550 | Olefin resin HARDLEN NA-3002 | Olefin resin HARDLEN NA-3002 | Olefin resin ARROWBASE TC-4010 | Olefin resin ARROWBASE TC-4010 |
| Amount of binder (parts) (solid content) | 3 | 5 | 3 | 5 | 3 | 5 |
| Acid value (mgKOH/g) | 18 | 18 | 33 | 33 | 23 | 23 |
| Tg (°C) | -24 | -24 | 0 | 0 | -27 | -27 |
| Weight-average molecular weight | 130,000 | 130,000 | 78,000 | 78,000 | 65,000 | 65,000 |
| Cyan aqueous pigment dispersion (parts) | LC-a | LC-a | LC-a | LC-a | LC-a | LC-a |
| | 27 | 27 | 27 | 27 | 27 | 27 |
| Propylene glycol (parts) | 15 | 15 | 15 | 15 | 15 | 15 |
| 1.3-Butanediol (parts) | 10 | 10 | 10 | 10 | 10 | 10 |
| Surfynol 440 (parts) | 0.5 | 0.5 | 0.5 | 0.5 | 0.5 | 0.5 |
| Pure water (parts) | Balance | Balance | Balance | Balance | Balance | Balance |
| Total (parts) | 100 | 100 | 100 | 100 | 100 | 100 |
| Ink pH | 9 | 9 | 9 | 9 | 9 | 9 |

**[Table 2]**

| Table 2 Cyan ink | Comparative preparation example HC-1 | Comparative preparation example HC-2 | Comparative preparation example HC-3 |
|---|---|---|---|
| Ink name | (HC-1) | (HC-2) | (HC-3) |
| Binder (product name) | Olefin resin HYTEC P-5060P | Acrylic resin JONCRYL 780 | Olefin resin APTOLOK BW-5550 |
| Amount of binder (parts) (solid content) | 3 | 3 | 3 |
| Acid value (mgKOH/g) | 55 | 46 | 18 |
| Tg(°C) | Unmeasurable (Note 1) | 92 | -24 |
| Weight-average molecular weight | 32,000 | 260,000 | 130,000 |
| Cyan aqueous pigment dispersion (parts) | LC-a | LC-a | LC-b |
| | 27 | 27 | 27 |
| Propylene glycol (parts) | 15 | 15 | 15 |
| 1.3-Butanediol (parts) | 10 | 10 | 10 |
| Surfynol 440 (parts) | 0.5 | 0.5 | 0.5 |
| Pure water (parts) | Balance | Balance | Balance |
| Total (parts) | 100 | 100 | 100 |
| Ink pH | 9 | 9 | 7 |

Note 1) Unmeasurable: measurement was not able to be done due to high degree of crystallinity.

**[Table 3]**

| Table 3 Magenta ink | Preparation example M-1 | Preparation example M-2 | Preparation example M-3 | Preparation example M-4 | Preparation example M-5 | Preparation example M-6 |
|---|---|---|---|---|---|---|
| Ink name | (M-1) | (M-2) | (M-3) | (M-4) | (M-5) | (M-6) |
| Binder (product name) | Olefin resin APTOLOK BW-5550 | Olefin resin APTOLOK BW-5550 | Olefin resin HARDLEN NA-3002 | Olefin resin HARDLEN NA-3002 | Olefin resin ARROWBASE TM-4010 | Olefin resin ARROWBASE TM-4010 |
| Amount of binder (parts) (solid content) | 3 | 5 | 3 | 5 | 3 | 5 |
| Acid value (mgKOH/g) | 18 | 18 | 33 | 33 | 23 | 23 |
| Tg (°C) | -24 | -24 | 0 | 0 | -27 | -27 |
| Weight-average molecular weight | 130,000 | 130,000 | 78,000 | 78,000 | 65,000 | 65,000 |
| Magenta aqueous pigment dispersion (parts) | LM-a | LM-a | LM-a | LM-a | LM-a | LM-a |
| | 27 | 27 | 27 | 27 | 27 | 27 |
| Propylene glycol (parts) | 15 | 15 | 15 | 15 | 15 | 15 |
| 1.3-Butanediol (parts) | 10 | 10 | 10 | 10 | 10 | 10 |
| Surfynol 440 (parts) | 0.5 | 0.5 | 0.5 | 0.5 | 0.5 | 0.5 |
| Pure water (parts) | Balance | Balance | Balance | Balance | Balance | Balance |
| Total (parts) | 100 | 100 | 100 | 100 | 100 | 100 |
| Ink pH | 9 | 9 | 9 | 9 | 9 | 9 |

**[Table 4]**

| Table 4 Magenta ink | Comparative preparation example HM-1 | Comparative preparation example HM-2 | Comparative preparation example HM-3 |
|---|---|---|---|
| Ink name | (HM-1) | (HM-2) | (HM-3) |
| Binder (product name) | Olefin resin HYTEC P-5060P | Acrylic resin JONCRYL 780 | Olefin resin APTOLOK BW-5550 |
| Amount of binder (parts) (solid content) | 3 | 3 | 3 |
| Acid value (mgKOH/g) | 55 | 46 | 18 |
| Tg (°C) | Unmeasurable (Note 1) | 92 | -24 |
| Weight-average molecular weight | 32,000 | 260,000 | 130,000 |
| Magenta aqueous pigment dispersion (parts) | LM-a | LM-a | LM-b |
| | 27 | 27 | 27 |
| Propylene glycol (parts) | 15 | 15 | 15 |
| 1.3-Butanediol (parts) | 10 | 10 | 10 |
| Surfynol 440 (parts) | 0.5 | 0.5 | 0.5 |
| Pure water (parts) | Balance | Balance | Balance |
| Total (parts) | 100 | 100 | 100 |
| Ink pH | 9 | 9 | 7 |

Note 1) Unmeasurable: measurement was not able to be done due to high degree of crystallinity.

**[Table 5]**

| Table 5 Yellow ink | Preparation example Y-1 | Preparation example Y-2 | Preparation example Y-3 | Preparation example Y-4 | Preparation example Y-5 | Preparation example Y-6 |
|---|---|---|---|---|---|---|
| Ink name | (Y-1) | (Y-2) | (Y-3) | (Y-4) | (Y-5) | (Y-6) |
| Binder (product name) | Olefin resin APTOLOK BW-5550 | Olefin resin APTOLOK BW-5550 | Olefin resin HARDLEN NA-3002 | Olefin resin HARDLEN NA-3002 | Olefin resin ARROWBASE TY-4010 | Olefin resin ARROWBASE TY-4010 |
| Amount of binder (parts) (solid content) | 3 | 5 | 3 | 5 | 3 | 5 |
| Acid value (mgKOH/g) | 18 | 18 | 33 | 33 | 23 | 23 |
| Tg (°C) | -24 | -24 | 0 | 0 | -27 | -27 |
| Weight-average molecular weight | 130,000 | 130,000 | 78,000 | 78,000 | 65,000 | 65,000 |
| Yellow aqueous pigment dispersion (parts) | LY-a | LY-a | LY-a | LY-a | LY-a | LY-a |
| | 27 | 27 | 27 | 27 | 27 | 27 |
| Propylene glycol (parts) | 15 | 15 | 15 | 15 | 15 | 15 |
| 1.3-Butanediol (parts) | 10 | 10 | 10 | 10 | 10 | 10 |
| Surfynol 440 (parts) | 0.5 | 0.5 | 0.5 | 0.5 | 0.5 | 0.5 |
| Pure water (parts) | Balance | Balance | Balance | Balance | Balance | Balance |
| Total (parts) | 100 | 100 | 100 | 100 | 100 | 100 |
| Ink pH | 9 | 9 | 9 | 9 | 9 | 9 |

**[Table 6]**

| Table 6 Yellow ink | Comparative preparation example HY-1 | Comparative preparation example HY-2 | Comparative preparation example HY-3 |
|---|---|---|---|
| Ink name | (HY-1) | (HY-2) | (HY-3) |
| Binder (product name) | Olefin resin HYTEC P-5060P | Acrylic resin JONCRYL 780 | Olefin resin APTOLOK BW-5550 |
| Amount of binder (parts) (solid content) | 3 | 3 | 3 |
| Acid value (mgKOH/g) | 55 | 46 | 18 |
| Tg(°C) | Unmeasurable (Note 1) | 92 | -24 |
| Weight-average molecular weight | 32,000 | 260,000 | 130,000 |
| Yellow aqueous pigment dispersion (parts) | LY-a | LY-a | LY-b |
| | 27 | 27 | 27 |
| Propylene glycol (parts) | 15 | 15 | 15 |
| 1.3-Butanediol (parts) | 10 | 10 | 10 |
| Surfynol 440 (parts) | 0.5 | 0.5 | 0.5 |
| Pure water (parts) | Balance | Balance | Balance |
| Total (parts) | 100 | 100 | 100 |
| Ink pH | 9 | 9 | 7 |

Note 1) Unmeasurable: measurement was not able to be done due to high degree of crystallinity.

**[Table 7]**

| Table 7 Black ink | Preparation example K-1 | Preparation example K-2 | Preparation example K-3 | Preparation example K-4 | Preparation example K-5 | Preparation example K-6 |
|---|---|---|---|---|---|---|
| Ink name | (K-1) | (K-2) | (K-3) | (K-4) | (K-5) | (K-6) |
| Binder (product name) | Olefin resin APTOLOK BW-5550 | Olefin resin APTOLOK BW-5550 | Olefin resin HARDLEN NA-3002 | Olefin resin HARDLEN NA-3002 | Olefin resin ARROWBASE TC-4010 | Olefin resin ARROWBASE TC-4010 |
| Amount of binder (parts) (solid content) | 3 | 5 | 3 | 5 | 3 | 5 |
| Acid value (mgKOH/g) | 18 | 18 | 33 | 33 | 23 | 23 |
| Tg (°C) | -24 | -24 | 0 | 0 | -27 | -27 |
| Weight-average molecular weight | 130,000 | 130,000 | 78,000 | 78,000 | 65 , 000 | 65,000 |
| Black aqueous pigment dispersion (parts) | LK-a | LK-a | LK-a | LK-a | LK-a | LK-a |
| | 27 | 27 | 27 | 27 | 27 | 27 |
| Propylene glycol (parts) | 15 | 15 | 15 | 15 | 15 | 15 |
| 1.3-Butanediol (parts) | 10 | 10 | 10 | 10 | 10 | 10 |
| Surfynol 440 (parts) | 0.5 | 0.5 | 0.5 | 0.5 | 0.5 | 0.5 |
| Pure water (parts) | Balance | Balance | Balance | Balance | Balance | Balance |
| Total (parts) | 100 | 100 | 100 | 100 | 100 | 100 |
| Ink pH | 9 | 9 | 9 | 9 | 9 | 9 |

**[Table 8]**

| Table 8 Black ink | Comparative preparation example HK-1 | Comparative preparation example HK-2 | Comparative preparation example HK-3 |
|---|---|---|---|
| Ink name | (HK-1) | (HK-2) | (HK-3) |
| Binder (product name) | Olefin resin HYTEC P-5060P | Acrylic resin JONCRYL 780 | Olefin resin APTOLOK BW-5550 |
| Amount of binder (parts) (solid content) | 3 | 3 | 3 |
| Acid value (mgKOH/g) | 55 | 46 | 18 |
| Tg(°C) | Unmeasurable (Note 1) | 92 | -24 |
| Weight-average molecular weight | 32,000 | 260,000 | 130,000 |
| Black aqueous pigment dispersion (parts) | LK-a | LK-a | LK-b |
| | 27 | 27 | 27 |
| Propylene glycol (parts) | 15 | 15 | 15 |
| 1.3-Butanediol (parts) | 10 | 10 | 10 |
| Surfynol 440 (parts) | 0.5 | 0.5 | 0.5 |
| Pure water (parts) | Balance | Balance | Balance |
| Total (parts) | 100 | 100 | 100 |
| Ink pH | 9 | 9 | 7 |

Note 1) Unmeasurable: measurement was not able to be done due to high degree of crystallinity.

### [Physical Property Evaluation]

### (Image Sharpness & Ejection Property)

A set of inks was loaded into an ink-jet recording apparatus (EB-100 produced by Konica Minolta, Inc.) including a piezo-type ink-jet nozzle unit constituted by 2 rows each of 256 nozzles. An image was recorded on a recording medium that was an OPP film (20 µm: Pylene P2161 produced by TOYOBO CO., LTD.). The size of liquid droplets was set to about 42 pl so that ink droplets were ejected at a resolution of 360 × 360 dpi (dpi is the number of dots placed within the span of 2.54 cm). The drive frequency was set to 2 kHz. While preheating was performed using a heater so that the temperature of the film surface was maintained at about 60°C, a checkered pattern was printed on 10 OPP films in succession using each of the configurations shown in Tables 9 to 12. Then, drying (80°C/60 seconds) was performed.

The printed outputs were visually inspected for irregularities of the checkered patterns by three panelists. An image sharpness evaluation was conducted with reference to the following criteria.
Good: All of the three panelists judged that irregularities of the checkered patterns were "absent".
Fair: One of the three panelists judged that irregularities of the checkered patterns were "present".
Poor: Two or more of the three panelists judged that irregularities of the checkered patterns were "present".

After the printing was performed, nozzles through which ink was not ejected were examined. An ejection property evaluation was conducted with reference to the following criteria.
Good: The proportion of the nozzles through which ink was not ejected was less than 1% for each of cyan ink, magenta ink, yellow ink, and black ink.
Fair: The proportion of the nozzles through which ink was not ejected was 1% or more and 5% or less for each of cyan ink, magenta ink, yellow ink, and black ink.
Poor: The proportion of the nozzles through which ink was not ejected was 5% or more for each of cyan ink, magenta ink, yellow ink, and black ink.

### (Blocking Resistance)

The ink-coated surface of the OPP film (20 µm: Pylene P2161 produced by TOYOBO CO., LTD.) that had been used in the ejection test and then dried was superimposed on the rear surface of another OPP film, and a pressure of 0.5 MPa (5 kgf/cm²) was applied to the OPP films. The OPP films were left standing for 24 hours and subsequently separated from each other. Then, a blocking resistance evaluation was conducted as follows.
Good: Ink did not transfer to the rear surface of the film when the superimposed films were separated from each other.
Fair: About 10% of ink transferred to the rear surface of the film when the superimposed films were separated from each other.
Poor: About 10% or more of ink transferred to the rear surface of the film when the superimposed films were separated from each other.

### (Lamination Test)

### (1) Preparation of Adhesive

An adhesive was prepared by mixing 10 parts of an adhesive "DICDRY LX-401 (two-component curing-type polyether-based adhesive)" produced by DIC Graphics Corporation, 10 parts of a curing agent that was a curing agent "SP-60 (two-component curing-type isocyanate-based curing agent)" produced by DIC Graphics Corporation, and 28 parts of ethyl acetate under stirring.

### (2) Method for Preparing Multilayered Bodies

The adhesive prepared in (1) was applied, using a bar coater No. 4, onto the ink-coating film formed on each OPP film (20 µm: Pylene P2161 produced by TOYOBO CO., LTD.) that has been used in the above-described ejection test and then dried. The whole OPP films were exposed to hot air for 10 seconds using a dryer to dry the deposited adhesive. Then, a CPP film P-2160T (produced by DIC Corporation) was laminated on each OPP film using a laminator having a roll temperature of 40°C. The laminated films were left standing in a thermostat kept at 40°C for 48 hours to cure the deposited adhesive.

### (3) Lamination Strength Test

The laminated bodies prepared by curing the adhesive to a sufficient degree in (2) were each cut to a size of 200-mm in length and 15-mm in width, and the bonded portion was separated over a length of about 30 mm. The separated portion was pulled with a tensile testing machine (TENSILON RTM-25 produced by Orientec Co., Ltd.) to fully separate the bonded portion. Thus, the adhesive strength of the lamination layer was measured. The evaluation was made as follows.
Good: The strength measured when the laminated film was peeled was 1.2 N/15mm or more.
Fair: The strength measured when the laminated film was peeled was 0.6 N/mm or more and less than 1.2 N/15mm.
Poor: The strength measured when the laminated film was peeled was less than 0.6 N/15mm.

**[Table 9]**

| Table 9 | | Example 1 | Example 2 | Example 3 | Example 4 | Example 5 | Example 6 |
|---|---|---|---|---|---|---|---|
| Ink combination | Cyan ink | C-1 | C-2 | C-3 | C-4 | C-5 | C-6 |
| | Magenta ink | M-1 | M-2 | M-3 | M-4 | M-5 | M-6 |
| | Yellow ink | Y-1 | Y-2 | Y-3 | Y-4 | Y-5 | Y-6 |
| | Black ink | K-1 | K-2 | K-3 | K-4 | K-5 | K-6 |
| Physical property evaluation results | Image sharpness | Good | Good | Good | Good | Good | Good |
| | Ejection property | Good | Good | Good | Good | Good | Good |
| | Blocking resistance | Good | Good | Good | Good | Good | Good |
| | Lamination strength | Good | Good | Good | Good | Good | Good |

**[Table 10]**

| Table 10 | | Example 7 | Example 8 | Example 9 | Example 10 | Example 11 | Example 12 |
|---|---|---|---|---|---|---|---|
| Ink combination | Cyan ink | C-5 | C-4 | C-3 | C-1 | C-2 | C-6 |
| | Magenta ink | M-3 | M-2 | M-6 | M-1 | M-4 | M-5 |
| | Yellow ink | Y-2 | Y-1 | Y-3 | Y-5 | Y-6 | Y-4 |
| | Black ink | K-5 | K-4 | K-6 | K-2 | K-5 | K-6 |
| Physical property evaluation results | Image sharpness | Good | Good | Good | Good | Good | Good |
| | Ejection property | Good | Good | Good | Good | Good | Good |
| | Blocking resistance | Good | Good | Good | Good | Good | Good |
| | Lamination strength | Good | Good | Good | Good | Good | Good |

**[Table 11]**

| Table 11 | | Example 13 | Example 14 | Example 15 | Example 16 | Example 17 | Example 18 |
|---|---|---|---|---|---|---|---|
| Ink combination | Cyan ink | C-4 | C-3 | C-2 | C-1 | C-2 | C-6 |
| | Magenta ink | M-1 | M-2 | M-3 | M-4 | M-5 | M-6 |
| | Yellow ink | Y-4 | Y-1 | Y-2 | Y-1 | Y-3 | Y-6 |
| | Black ink | K-2 | K-1 | K-3 | K-4 | K-5 | K-6 |
| Physical property evaluation results | Image sharpness | Good | Good | Good | Good | Good | Good |
| | Ejection property | Good | Good | Good | Good | Good | Good |
| | Blocking resistance | Good | Good | Good | Good | Good | Good |
| | Lamination strength | Good | Good | Good | Good | Good | Good |

**[Table 12]**

| Table 12 | | Comparative example 1 | Comparative example 2 | Comparative example 3 | Comparative example 4 |
|---|---|---|---|---|---|
| Ink combination | Cyan ink | HC-1 | HC-2 | HC-3 | HC-1 |
| | Magenta ink | HM-1 | HM-2 | HM-3 | M-4 |
| | Yellow ink | HY-1 | HY-2 | HY-3 | Y-1 |
| | Black ink | HK-1 | HK-2 | HK-3 | K-4 |
| Physical property evaluation results | Image sharpness | Poor | Poor | Fair | Fair |
| | Ejection property | Poor | Poor | Poor | Fair |
| | Blocking resistance | Poor | Poor | Poor | Poor |
| | Lamination strength | Poor | Poor | Poor | Poor |

The above results show that good image sharpness, a good ejection property, high blocking resistance, and a high lamination strength were achieved in Examples 1 to 18.

On the other hand, the desired advantageous effects were not achieved in Comparative Example 1, in which an olefin resin having a high degree of crystallinity such that Tg was not be able to be measured was used as a binder resin, and in Comparative Example 2, in which an acrylic resin emulsion was used. The desired advantageous effects were not also achieved in the case where a substance other than a styrene acrylic resin copolymer was used as the pigment-dispersing agent. The desired advantageous effects were not also achieved in Comparative Example 4, in which one of the inks was the same as the ink used in Comparative Example 1.

## Claims

1. A water-based ink for ink-jet recording, the water-based ink comprising a pigment, a pigment-dispersing agent, a binder, and water, wherein the pigment-dispersing agent includes a styrene-acrylic copolymer and the binder includes a polyolefin resin, wherein the polyolefin resin has a weight-average molecular weight of 10,000 or more and 1,000,000 or less and an acid value of 1 to 200 mgKOH/g.

2. The water-based ink for ink-jet recording according to Claim 1, wherein the polyolefin resin includes a polyether polymer chain.

3. The water-based ink for ink-jet recording according to Claim 1 or 2, the water-based ink being used as an ink for lamination.

4. A method for producing a laminated body, the method comprising the steps of: forming a print layer on a nonabsorbable base material by an ink-jet recording method using the water-based ink for ink-jet recording according to any one of Claims 1 to 3; forming an adhesive layer on the print layer; and laminating a sealant film layer on a surface of the adhesive layer.

5. The method for producing a laminated body according to Claim 4, wherein the nonabsorbable base material includes a plastic film.

## Patentansprüche

1. Wasserbasierte Tinte zur Tintenstrahlaufzeichnung, wobei die wasserbasierte Tinte ein Pigment, ein Pigmentdispergiermittel, ein Bindemittel und Wasser umfasst, wobei das Pigmentdispergiermittel ein Styrol-Acryl-Copolymer beinhaltet und das Bindemittel ein Polyolefinharz beinhaltet, wobei das Polyolefinharz ein gewichtsgemitteltes Molekulargewicht von 10.000 oder mehr und 1.000.000 oder weniger und einen Säurewert von 1 bis 200 mgKOH/g aufweist.

2. Wasserbasierte Tinte zur Tintenstrahlaufzeichnung nach Anspruch 1, wobei das Polyolefinharz eine Polyetherpolymerkette beinhaltet.

3. Wasserbasierte Tinte zur Tintenstrahlaufzeichnung nach Anspruch 1 oder 2, wobei die wasserbasierte Tinte als eine Tinte zur Lamination verwendet wird.

4. Verfahren zum Herstellen eines laminierten Körpers, wobei das Verfahren die Schritte umfasst: Bilden einer Druckschicht auf einem nicht absorptionsfähigen Grundmaterial durch ein Tintenstrahlaufzeichnungsverfahren unter Verwendung der wasserbasierten Tinte zur Tintenstrahlaufzeichnung nach einem der Ansprüche 1 bis 3; Bilden einer Haftschicht auf der Druckschicht; und Laminieren einer Abdichtfilmschicht auf einer Oberfläche der Haftschicht.

5. Verfahren zum Herstellen eins laminierten Körpers nach Anspruch 4, wobei das nicht absorptionsfähigen Grundmaterial einen Kunststofffilm beinhaltet.

## Revendications

1. Encre à base d'eau pour enregistrement par jet d'encre, l'encre à base d'eau comprenant un pigment, un agent de dispersion de pigment, un liant, et de l'eau, dans laquelle l'agent de dispersion de pigment comprend un copolymère de styrène-acrylique et le liant comprend une résine de polyoléfine, dans laquelle la résine de polyoléfine présente un poids moléculaire moyen en poids de 10 000 ou plus ou de 1 000 000 ou moins et un indice d'acidité de 1 à 200 mg de KOH/g.

2. Encre à base d'eau pour enregistrement par jet d'encre selon la revendication 1, dans laquelle la résine de polyoléfine comprend une chaîne polymère de polyéther.

3. Encre à base d'eau pour enregistrement par jet d'encre selon la revendication 1 ou 2, l'encre à base d'eau étant utilisée comme encre pour stratification.

4. Procédé de production d'un corps stratifié, le procédé comprenant les étapes suivantes : la formation d'une couche d'impression sur un matériau de base non absorbable par un procédé d'enregistrement par jet d'encre en utilisant l'encre à base d'eau pour enregistrement par jet d'encre selon l'une quelconque des revendications 1 à 3 ; la formation d'une couche adhésive sur la couche d'impression ; et la stratification d'une couche de film d'étanchéité sur une surface de la couche adhésive.

5. Procédé de production d'un corps stratifié selon la revendication 4, dans lequel le matériau de base non absorbable comprend un film plastique.
